# EUROPÄISCHE PATENTSCHRIFT

(11) **EP 1 471 008 B1**
(45) Veröffentlichungstag und Bekanntmachung des Hinweises auf die Patenterteilung: **09.06.2010**
(21) Anmeldenummer: 03405294.4
(22) Anmeldetag: 25.04.2003
(51) Int. Cl.: B65B 57/00, G05B 19/418

(54) **Verfahren und System zur Überwachung eines Verpackungs-oder Abfüllvorgangs**
Method and system for monitoring a packaging or a filling process
Procédé et système de surveillance d'un procédé d'emballage ou de remplissage

(43) Veröffentlichungstag der Anmeldung: 27.10.2004
(73) Patentinhaber: SIG Technology Ltd., 8212 Neuhausen am Rheinfall (CH)
(72) Erfinder: Dietzsch, Claudius, 8135 Langnau am Albis (CH); Eccarius, Michael, 52441 Linnich (DE)
(74) Vertreter: Thielmann, Andreas

(56) Entgegenhaltungen:
- EP-A- 1 266 830
- DE-A- 3 422 044
- DE-A- 10 116 104
- US-B1- 6 494 017

## Beschreibung

Die Erfindung betrifft ein Verfahren zur automatischen Überwachung eines Verpackungs- oder Abfüllvorgangs einer Verpackungsmaschine, wobei die Verpackungsmaschine in mehreren sequentiellen oder parallelen Prozessschritten gesteuert wird, wobei erste Dateninformationen erfasst werden, welche die Packung und/oder eines zur Bildung der Packung verwendeten Packstoffs spezifizieren, wobei zweite Dateninformationen erfasst werden, welche Maschinenteile und/oder Maschinenfunktionen der Verpackungsmaschine und/oder zur Herstellung der Packung in der Verpackungsmaschine verwendete Produkte spezifizieren und wobei vor mindestens einem der Prozessschritte eine derartige Qualitätsprüfung durchgeführt wird, indem die für die Durchführung der Qualitätsprüfung notwendigen Dateninformationen erfasst und auf diesen Informationen basierende Istdaten ermittelt werden, diese Istdaten mit vorgegebenen Solldaten verglichen werden und bei innerhalb eines Toleranzbereichs befindlicher Übereinstimmung der Solldaten und Istdaten dieser Prozessschritt freigegeben wird.

Ferner betrifft die Erfindung ein System zur automatischen Überwachung eines Verpackungs- oder Abfüllvorgangs einer Verpackungsmaschine, wobei die Verpackungsmaschine mittels einer Steuerung in mehreren sequentiellen oder parallelen Prozessschritten steuerbar ist, wobei das System erste Mittel zur Erfassung von ersten Dateninformationen aufweist, welche die Packung und/oder eines zur Bildung der Packung verwendeten Packstoffs spezifizieren und wobei das System zweite Mittel zur Erfassung von zweiten Dateninformationen aufweist, welche Maschinenteile und/oder Maschinenfunktionen der Verpackungsmaschine und/oder zur Herstellung der Packung in der Verpackungsmaschine verwendete Produkte spezifizieren.

Im Stand der Technik sind die unterschiedlichsten Vorrichtungen zum Verpacken von Stückgütern oder zum Abfüllen von flüssigen, körnigen, pulverförmigen und/oder festen Produkten in Portionspackungen bekannt. Es sind hierbei Verpackungs- oder Abfüllvorrichtungen bekannt, welche die zu befüllenden Packungen vor beziehungsweise während dem Befüllen aus einem Rohstoff oder einem Halbzeug herstellen. Des Weiteren sind im Stand der Technik verschiedene Überwachungssysteme bekannt, welche die Qualität der befüllten Verpackungen gewährleisten sollen.

EP-A-0'131'241 und EP-A-1'266'830 schlagen beispielsweise vor, den in der Verpackungsmaschine verwendeten Packstoff automatisch zu identifizieren, damit die Maschine selbsttätig die richtigen Parameter zur Verarbeitung des Packstoffs wählt. EP-A-0'929'474 offenbart einen Packstoff, welcher mit einem derartigen Identifikationsmittel versehen ist.

US-A-2002/0104293 offenbart ein System, welches ermöglicht, unterschiedliche Produkte mit derselben Maschine zu verpacken, indem die einzelnen zu verpackenden Produkte automatisch identifiziert und die entsprechende Verpackungsart gewählt wird.

In DE-A-101'16'104 wurde erkannt, dass diese Einzellösungen keine genügende Qualitätskontrolle ermöglichen. Es wird deshalb vorgeschlagen, Dateninformationen von mehreren Oberflächenkontrollen des Packstoffs und Wiegedaten einheitlich zu erfassen und zu verarbeiten. Defekte, beschädigte, nicht oder nur teilweise gefüllte Packungen lassen sich dadurch besser erkennen und aus dem laufenden Produktionsprozess ausschleusen.

Ferner offenbart WO 99/39817 ein Verfahren zur Herstellung von biologischen Chips, bei welchem pro Produktionsschritt und -los ein Muster überprüft wird. Genügt dieses Muster den Qualitätsanforderungen nicht, so wird das gesamte Los aus der Produktionslinie ausgeschieden.

In US 6'470'230 wird ein selbstlernendes System zur Herstellung von Werkstücken beschrieben. Hier werden Messdaten eines hergestellten Werkstücks in die Maschinensteuerung geladen, um die Qualität nachfolgend produzierter Werkstücke zu verbessern.

Es ist Aufgabe der Erfindung, ein Verfahren und ein System zu schaffen, welche eine umfassende Qualitätskontrolle ermöglichen.

Diese Aufgabe lösen ein Verfahren und ein System mit den Merkmalen des Patentanspruchs 1 beziehungsweise 15.

Erfindungsgemäß werden nicht nur der Packstoff und die Packung überwacht, sondern auch Maschinenteile, Maschinenfunktionen und/oder weitere bei der Herstellung der Verpackung bzw. bei der Abfüllung verwendete Produkte. Dadurch wird eine umfassende Qualitätskontrolle ermöglicht, da verhindert werden kann, dass die Maschine mit falschen Parametern arbeitet, dass die Verschleißteile der Maschine nicht mehr durch Originalteile sondern Billigkopien ersetzt werden und dass anstelle von Originalzusatzprodukten, beispielsweise ein Original-Klebstoff, Billigprodukte verwendet werden.

Das erfindungsgemäße Verfahren sieht vor, dass etwa durch den Hersteller eine Sicherheitskontrolle für Garantieleistungen durchgeführt wird. Werden nicht ausschließlich Originalteile und -produkte verwendet und die Maschine im vom Hersteller vorgeschlagenen Modus betrieben, so wird dies im erfindungsgemäßen System detektiert und vermerkt.

Vorteilhaft ist, dass sich das System aus gleichen Modulen aufbauen lässt, wobei jeweils ein Modul eine Eigenschaftsklasse bestehend aus ausgewählten Dateninformationen umfasst. Je nach gewünschter Qualitätskontrolle oder zu überwachender Verpackungsmaschine lassen sich die Module auf einfache Art und Weise zum gewünschten System zusammensetzen. Das erfindungsgemäße System zeichnet sich somit durch einen hohen Flexibilitätsgrad aus.

Weitere vorteilhafte Varianten des Verfahrens und vorteilhafte Ausführungsformen gehen aus den abhängigen Patentansprüchen hervor.

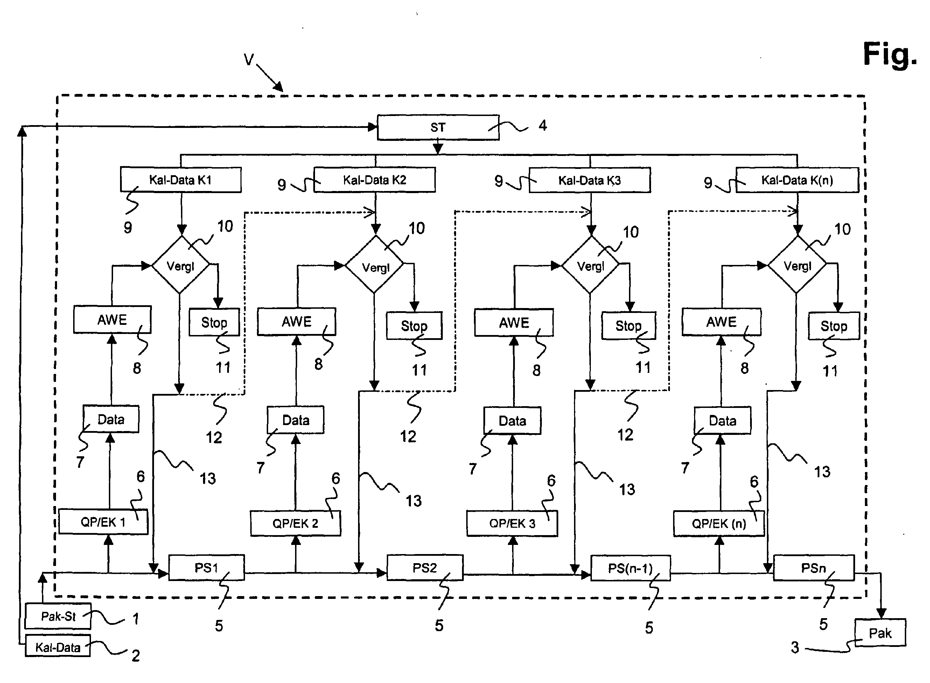

Im Folgenden wird der Erfindungsgegenstand anhand von bevorzugten Ausführungsbeispielen, welche anhand der beiliegenden Zeichnung erläutert werden, beschrieben. Die einzige Figur zeigt ein Flussdiagramm des erfindungsgemäßen Systems, eingebaut in eine Verpackungsmaschine.

In der Figur ist mit gestrichelten Linien eine Verpackungsmaschine V dargestellt. Dieser Verpackungsmaschine V wird ein Packstoff 1 zugeführt. Der Packstoff 1 kann aus bereits vorgefertigten, offenen Packungen bestehen. Üblicherweise handelt es sich jedoch um eine Packstoffbahn ab Rolle oder um Packstoffzuschnitte, welche in der Verpackungsmaschine V zu Packungen verarbeitet und mit Produkten gefüllt werden. Die Produkte können wie eingangs erwähnt Stückgüter oder Schüttgut in flüssiger, körniger, pulverförmiger und/oder fester Form sein.

Der verwendete Packstoff 1 ist mit Kalibrierungsdaten 2 versehen. Je nach Art des verwendeten Packstoffs 1 lassen sich diese Daten automatisch mittels des erfindungsgemäßen Systems erfassen und in eine Steuerung 4 der Verpackungsmaschine V übermitteln. Es ist jedoch auch möglich, dass diese Daten durch elektronische Übermittlung oder von Hand in das System eingegeben werden.

Der Packstoff 1 durchläuft in der Verpackungsmaschine V mehrere Prozessschritte 5 und verlässt die Maschine als gefüllte, verschlossene Packung 3. Die einzelnen Prozessschritte 5 sind in der Figur mit PS1 bis PSn bezeichnet.

Die Verpackungsmaschine V wird über die Steuerung 4 in mehreren sequentiellen und/oder parallelen Prozessschritten 5 von der Bildung einer Packung, über die Einbringung des Packguts bis zum Verschließen der Packung gesteuert. Es ist auch möglich, dass die Verpackungsmaschine die Packung noch nicht schließt, sondern dass dies erst in einer nachfolgenden Verpackungsmaschine erfolgt. Die Prozessschritte 5 müssen nicht alle mit der Verarbeitung des Packstoffs zusammenhängen. Sie können auch ein Vorbereiten oder Einfüllen des Packguts oder eine Bewegung eines Maschinenteils, beispielsweise eines Messers oder einer Siegelbacke, betreffen.

Der Packstoff wird während seiner Verarbeitung überwacht und die erhaltenen Informationen als erste Dateninformationen im System, vorzugsweise in der zentralen Steuerung 4, erfasst. Ebenfalls Bestandteil der ersten Dateninformationen sind die oben erwähnten Kalibrierungsdaten 2 des Packstoffs 1. Erfindungsgemäß werden ferner zweite Dateninformationen gesammelt, welche Maschinenteile und Maschinenfunktionen der Verpackungsmaschine sowie Daten zu weiteren Produkten, welche bei der Herstellung der Packung verwendet werden, spezifizieren. Informationen zu Maschinenteilen können beispielsweise Codes sein, welche auf Originalteilen vorhanden sind und welche als Verschleißteile regelmäßig ausgewechselt werden müssen. Derartige Verschleißteile der Verpackungsmaschine sind beispielsweise Siegelbacken, Heizungen, Trennmesser oder Abfüllköpfe. Informationen zu Maschinenfunktionen können beispielsweise Schweißtemperaturen, Schweißzeiten, verwendete Pressdrücke oder Vorschubgeschwindigkeiten sein. Weitere Produkte können beispielsweise Klebstoffe sein, welche zur Verleimung des Packstoffs verwendet werden.

Die Dateninformationen aus der Gruppe der ersten und zweiten Dateninformationen werden im System zu vorgegebenen Eigenschaftsklassen zusammengefasst. Welche Informationen in welche Eigenschaftsklassen abgelegt werden, hängt von der Art der Verpackungsmaschine V und der Art der gewünschten Qualitätskontrolle ab.

Vor mindestens einem der Prozessschritte 5 wird eine Qualitätsprüfung 6 durchgeführt. Hierzu werden die Dateninformationen der zugehörigen Eigenschaftsklasse erfasst, beispielsweise indem mittels geeigneter Sensoren eine Eigenschaft des Packstoffs, der teilweise oder ganz fertig gestellten Packung oder der verwendete Klebstoff überprüft wird. Als Sensoren eignen sich je nach Art der zu prüfenden Eigenschaft akustische, optische, elektrische oder magnetische Sensoren. Andere Eigenschaften, insbesondere Maschinenparameter, lassen sich auch von der Steuerung 4 liefern. In der Figur sind die verschiedenen Qualitätsprüfungen, welche jeweils einer Eigenschaftsklasse zugeordnet sind, mit QP/EK1 bis QP/EK(n) bezeichnet.

Die erfassten Dateninformationen einer Qualitätsprüfung 5 werden als Daten 7 einer Auswerteeinheit 8 übermittelt. In dieser Auswerteeinheit 8 werden die Istdaten ermittelt, welche auf den übermittelten Dateninformationen basieren. Diese Istdaten werden einer Vergleichseinheit 10 übermittelt und mit Solldaten 9 verglichen, welche vom System, vorzugsweise von der Steuerung 4, in die Vergleichseinheit 10 geliefert werden. Diese Solldaten sind in der Figur als Kalibrierungsdaten pro Eigenschaftsklasse dargestellt und mit Kal-Data K1 bis K(n) bezeichnet. Ergibt der Vergleich, dass die Istdaten innerhalb eines Toleranzbereichs mit den Solldaten übereinstimmen, so wird der nächstfolgende Prozessschritt freigegeben, wie dies über die Leitung 13 in der Figur erkennbar ist. Liegt das Ergebnis nicht innerhalb des Toleranzbereichs, so wird vorzugsweise der Verpackungs- oder Abfüllvorgang automatisch gestoppt. In der Figur ist dieser Schritt mit der Bezugsziffer 11 versehen. Anstelle einer Unterbrechung des Vorgangs ist es auch möglich, eine Fehlermeldung zu generieren und den Vorgang noch einen vorgegebenen Zeitraum aufrechtzuerhalten.

Wie in der Figur mit gestrichelten Linien 12 dargestellt ist, lässt sich ein Ergebnis eines Vergleichs auch in einer der folgenden, vorzugsweise der nächstfolgenden Qualitätsprüfung 6 übernehmen. Vorzugsweise wird dieses Ergebnis mit den Solldaten der folgenden Eigenschaftsklasse verarbeitet und in die Vergleichseinheit 10 eingegeben. Diese Schritte lassen sich iterativ solange wiederholen, wie Eigenschaftsklassen und Qualitätsprüfungsmodule vorhanden sind.

Im Falle einer Verpackungsmaschine, deren Endprodukt eine verschlossene, gefüllte Packung ist, kann in der ersten Qualitätsprüfung beispielsweise der Packstoffzuschnitt vor dem Aufrichten überprüft werden, beispielsweise die Rillfähigkeit, die Siegelfähigkeit oder die Faltfähigkeit. In einer zweiten Prüfung wird die füllfertige Packung vor dem Befüllen kontrolliert, beispielsweise ihre Sterilität. In einer dritten Prüfung wird die befüllte Packung beziehungsweise der verwendete Klebstoff vor dem Verschließen überprüft und in einer vierten Prüfung wird die verschlossene Packung, beispielsweise auf Dichtheit, überprüft. Dabei lassen sich weitere Prüfungen dazwischenschalten, beispielsweise für die Siegeltemperatur, die verwendeten Siegelbacken oder die Siegelzeit. Auch das Messer, mit welchem ein Packstoff-Zuschnitt hergestellt wird, lässt sich überprüfen.

Vorzugsweise ist in jeder Eigenschaftsklasse nur eine physikalische Eigenschaft berücksichtigt. Es ist jedoch auch möglich, mehrere unterschiedliche Eigenschaften in dieselbe Eigenschaftsklasse aufzunehmen. Üblicherweise werden mindestens ein Teil der Solldaten zur Steuerung der Verpackungsmaschine verwendet. Vorzugsweise wird für alle Qualitätsprüfungen dieselbe Auswerte- und Vergleichseinheit verwendet, obwohl sie in der Figur zur besseren Lesbarkeit mehrfach abgebildet ist.

Wie in der Figur erkennbar ist, laufen alle Qualitätsprüfungen nach derselben Routine ab, unabhängig davon, welche Dateninformationen gesammelt werden sollen. Die in einer Eigenschaftsklasse enthaltenen Informationen lassen sich nach vorbestimmten Regeln zur Erzielung eines Entscheids, d.h. ob die Maschine gestoppt oder weiter betrieben wird, verarbeiten. Dies erleichtert die Gestaltung der Steuerung und des zugehörigen oder integrierten Systems. Dank seines modularen Aufbaus lässt sich das System auf einfache Art und Weise in bestehende Maschinen einbauen. Eine Erweiterung oder Modifikation des Systems ist ebenso vereinfacht.

## Patentansprüche

1. Verfahren zur automatischen Überwachung eines Verpackungs- oder Abfüllvorgangs einer Verpackungsmaschine (V), wobei die Verpackungsmaschine (V) in mehreren sequentiellen oder parallelen Prozessschritten (5) gesteuert wird,
wobei erste Dateninformationen erfasst werden, welche die Packung und/oder eines zur Bildung der Packung verwendeten Packstoffs (1) spezifizieren,
wobei zweite Dateninformationen erfasst werden, welche Maschinenteile und/oder Maschinenfunktionen der Verpackungsmaschine und/oder zur Herstellung der Packung in der Verpackungsmaschine (V) verwendete Produkte spezifizieren und
wobei vor mindestens einem der Prozessschritte (5) eine derartige Qualitätsprüfung (6) durchgeführt wird, indem die für die Durchführung der Qualitätsprüfung (6) notwendigen Dateninformationen erfasst und auf diesen Informationen basierende Istdaten ermittelt werden, diese Istdaten mit vorgegebenen Solldaten verglichen werden und bei innerhalb eines Toleranzbereichs befindlicher Übereinstimmung der Solldaten (9) und Istdaten dieser Prozessschritt (5) freigegeben wird,
**dadurch gekennzeichnet, dass**
die Prozessschritte (5) von der Bildung einer Packung über eine Einbringung des Packguts in die Packung bis zum Verlassen der befüllten Packung reichen, dass die ersten und zweiten Dateninformationen zur Durchführung von mindestens einer Qualitätsprüfung (6) verwendet werden und dass die ermittelten Dateninformationen zur Durchführung einer Sicherheitskontrolle für Garantieleistungen verwendet werden.

2. Verfahren nach Anspruch 1, **dadurch gekennzeichnet, dass** vor mehreren Prozessschritten (5) je eine der besagten Qualitätsprüfungen (6) durchgeführt wird, wobei die Qualitätsprüfung (6) nach einer gleichbleibenden Routine verläuft.

3. Verfahren nach einem der Ansprüche 1 oder 2, **dadurch gekennzeichnet, dass** mehrere Qualitätsprüfungen durchgeführt werden, wobei mindestens in einem Teil der Qualitätsprüfungen Ergebnisse von früheren Qualitätsprüfungen berücksichtigt werden.

4. Verfahren nach einem der Ansprüche 1 bis 3, **dadurch gekennzeichnet, dass** pro Qualitätsprüfung eine einzige physikalische Eigenschaft überprüft wird.

5. Verfahren nach einem der Ansprüche 1 bis 4, **dadurch gekennzeichnet, dass** die ersten und zweiten Dateninformationen mittels akustischer, optischer, elektrischer oder magnetischer Sensoren erfasst werden.

6. Verfahren nach einem der Ansprüche 1 bis 5, **dadurch gekennzeichnet, dass** bei ungenügender Übereinstimmung der Solldaten (9) und Istdaten die Verpackungsmaschine (V) automatisch gestoppt wird.

7. Verfahren nach einem der Ansprüche 1 bis 6, **dadurch gekennzeichnet, dass** die Ermittlung der Istdaten in einer Auswerteeinheit (8) erfolgt.

8. Verfahren nach Anspruch 7, **dadurch gekennzeichnet, dass** eine gemeinsame Auswerteeinheit (8) für alle Qualitätsprüfungen (6) verwendet wird.

9. Verfahren nach einem der Ansprüche 1 bis 8, **dadurch gekennzeichnet, dass** mindestens ein Packstoffzuschnitt vor dem Aufrichten einer ersten Qualitätsprüfung (6), dass mindestens eine füllfertige Packung vor dem Befüllen einer zweiten Qualitätsprüfung (6), dass mindestens eine befüllte Packung vor dem Verschliessen einer dritten Qualitätsprüfung (6) und dass mindestens eine verschlossene Packung einer vierten Qualitätsprüfung (6) unterzogen wird.

10. Verfahren nach einem der Ansprüche 1 bis 9, **dadurch gekennzeichnet, dass** für den Erhalt der zweiten Dateninformationen, welche in der Verpackungsmaschine (V) verwendete Produkte beschreiben, ein zur Bildung der Packung verwendeter Klebstoff detektiert wird.

11. Verfahren nach einem der Ansprüche 1 bis 10, **dadurch gekennzeichnet, dass** für den Erhalt der zweiten Dateninformationen, welche Maschinenfunktionen der Verpackungsmaschine (V) beschreiben, Siegelparameter bestimmt werden.

12. Verfahren nach einem der Ansprüche 1 bis 11, **dadurch gekennzeichnet, dass** für den Erhalt der ersten Dateninformationen die Rillfähigkeit und/oder die Faltfähigkeit und/oder die Siegelfähigkeit des zur Bildung der Packung verwendeten Packstoffs (1) erfasst werden und/oder dass die Sterilität der befüllten Packung und/oder dass die Dichtheit der verschlossenen Packung erfasst werden.

13. Verfahren nach einem der Ansprüche 1 bis 12, **dadurch gekennzeichnet, dass** Dateninformationen aus der Gruppe der ersten und zweiten Dateninformationen zu Eigenschaftsklassen zusammengefasst werden und dass jeweils in einer Qualitätsprüfung (6) eine Eigenschaftsklasse überprüft wird.

14. Verfahren nach Anspruch 13, **dadurch gekennzeichnet, dass** die in der Eigenschaftsklasse enthaltenen Informationen nach vorbestimmten Regeln zur Erzielung eines Entscheids verarbeitet werden.

15. System zur automatischen Überwachung eines Verpackungs- oder Abfüllvorgangs einer Verpackungsmaschine (V), wobei die Verpackungsmaschine (V) mittels einer Steuerung (4) in mehreren sequentiellen oder parallelen Prozessschritten (5) steuerbar ist, wobei das System erste Mittel zur Erfassung von ersten Dateninformationen aufweist, welche die Packung und/oder eines zur Bildung der Packung verwendeten Packstoffs (1) spezifizieren und wobei das System zweite Mittel zur Erfassung von zweiten Dateninformationen aufweist, welche Maschinenteile und/oder Maschinenfunktionen der Verpackungsmaschine (V) und/oder zur Herstellung der Packung in der Verpackungsmaschine (V) verwendete Produkte spezifizieren,
**dadurch gekennzeichnet, dass**
die Prozessschritte (5) von der Bildung einer Packung über eine Einbringung des Packguts in die Packung bis zum Verlassen der Packung steuerbar sind,
dass das System mindestens eine Auswertungs- und Vergleichseinheit (8,10) aufweist zur Ermittlung von auf den ersten und zweiten Dateninformationen basierenden Istdaten (9) und zum Vergleich dieser Istdaten mit vorgegebenen Solldaten vor einem Prozessschritt (5),
dass das System Mittel zur Freigabe dieses Prozessschritts (5) aufweist und
dass das System Mittel zum Detektieren und Vermerken von Dateninformationen zur Durchführung einer Sicherheitskontrolle für Garantieleistungen aufweist.

16. System nach Anspruch 15, **dadurch gekennzeichnet, dass** das System mehrere Module aufweist, wobei jedes Modul der Durchführung einer Qualitätsprüfung (6) vor einem Prozessschritt (5) dient und wobei die Module eine im wesentlichen gleiche Struktur aufweisen.

17. System nach Anspruch 16, **dadurch gekennzeichnet, dass** Dateninformationen aus der Gruppe der ersten und zweiten Dateninformationen zu Eigenschaftsklassen zusammengefasst sind und dass jedes Modul einer Eigenschaftsklasse zugeordnet ist.

## Claims

1. A method for automatic monitoring of a packaging or filling operation on a packaging machine (V), wherein the packaging machine (V) is controlled in multiple sequential or parallel process steps (5), wherein first data information specifying the package and/or a packaging material (1) used to form the package is acquired, wherein second data information is acquired, specifying machine parts and/or machine functions of the packaging machine and/or products used for the production of the package in the packaging machine (V), and wherein before at least one of the process steps (5), such a quality test (6) is performed by acquiring the data information required for performing the quality test (6) and determining actual data based on this information, comparing these actual data with predefined setpoint data, and enabling this process step (5) when there is a correspondence between the setpoint data (9) and the actual data within a tolerance range,
**characterized in that**
the process steps (5) range from forming a package to introducing the package contents into the package to leaving the filled package; the first data information and the second data information are used to perform at least one quality test (6), and the data information acquired is used to perform a safety check for warranty services.

2. The method according to claim 1, **characterized in that** before multiple process steps (5), one of said quality tests (6) is performed, wherein the quality test (6) runs according to a uniform routine.

3. The method according to any one of claims 1 or 2, **characterized in that** multiple quality tests are performed, wherein results of earlier quality tests are taken into account in at least some of the quality tests.

4. The method according to any one of claims 1 to 3, **characterized in that** a single physical property is checked per quality test.

5. The method according to any one of claims 1 to 4, **characterized in that** the first data information and the second data information are acquired by means of acoustic, optical, electric or magnetic sensors.

6. The method according to any ane of claims 1 to 5, **characterized in that** the packaging machine (V) is stopped automatically when there is an inadequate correspondence between the setpoint data (9) and the actual data.

7. The method according to any one of claims 1 to 6, **characterized in that** the actual data are determined in an evaluation unit (8).

8. The method according to claim 7, **characterized in that** a shared evaluation unit (8) is used for all the quality tests (6).

9. The method according to any one of claims 1 to 8, **characterized in that** at least one packaging blank is subjected to a first quality test (6) before being set upright; at least one ready-to-fill package is subjected to a second quality test (6) before being filled; at least one filled package is subjected to a third quality test (6) before being closed; and at least one closed package is subjected to a fourth quality test (6).

10. The method according to any one of claims 1 to 9, **characterized in that** an adhesive used to form the package is detected to obtain the second data information, which describes products used in the packaging machine (V).

11. The method according to any one of claims 1 to 10, **characterized in that** sealing parameters are determined to obtain the second data information, which describes machine functions of the packaging machine (V).

12. The method according to any one of claims 1 to 11, **characterized in that** groovability and/or foldability and/or sealability of the packaging material (1) used to form the package is/are acquired and/or the sterility of the filled package and/or the imperviousness of the sealed package is/are acquired to obtain the first data information.

13. The method according to any one of claims 1 to 12, **characterized in that** data information from the group of the first and second data information is combined into property classes, and a property class is checked in each quality test (6).

14. The method according to claim 13, **characterized in that** the information contained in the property class is processed according to predetermined rules to obtain a decision.

15. A system for automatic monitoring of a packaging or filling operation by a packaging machine (V), wherein the packaging machine (V) can be controlled by a controller (4) in multiple sequential or parallel process steps (5), wherein the system has first means for acquiring first data information, specifying the package and/or a packaging material (1) used to form the package, and wherein the system has second means for acquiring second data information, specifying machine parts and/or machine functions of the packaging machine (V) and/or products used for the production of the package in the packaging machine (V),
**characterized in that**
the process steps (5) can be controlled by the formation of a package by introducing the package contents into the package until leaving the package;
the system has at least one evaluation and comparison unit (8, 10) for determining actual data (9) based on the first and second data information and for comparing these actual data with predefined setpoint data before a process step (5);
the system has means for enabling this process step (5), and the system has means for detecting and recording data information for performing a safety check for warranty services.

16. The system according to claim 15, **characterized in that** the system has multiple modules, wherein each module is used to perform a quality test (6) before a process step (5), and wherein the modules have essentially the same structure.

17. The system according to claim 16, **characterized in that** data information from the group of the first and second data information are combined into property classes, and each module is assigned to a property class.

## Revendications

1. Procédé de surveillance automatique d'un processus d'emballage ou de remplissage d'une machine d'emballage (V), la machine d'emballage (V) étant commandée dans plusieurs phases de procédé séquentielles ou parallèles (5), des premières données informatives, qui spécifient l'emballage et / ou un matériau d'emballage (1), utilisé pour la réalisation dudit emballage, et des deuxièmes données informatives, qui spécifient des parties de la machine et / ou des fonctions mécaniques de la machine d'emballage et / ou les produits utilisés pour la fabrication de l'emballage dans la machine d'emballage (V) étant saisies, et un contrôle de qualité (6) étant exécuté, avant au moins l'une des phases de procédé (5), par exécution d'une saisie des données informatives, nécessaires à la réalisation du contrôle de qualité (6) et d'une détermination des données réelles, basées sur ces informations, ces données réelles étant comparées avec les données de consigne prédéterminées, et cette phase de procédé (5) étant autorisée quand les données de consigne (9) et les données réelles concordent les unes avec les autres, **caractérisé en ce que** les phases de procédé (5) vont de la formation d'un emballage jusqu'à la sortie de l'emballage rempli, en passant par le remplissage de l'emballage avec les produit à emballer, **en ce que** les premières et deuxièmes données informatives sont utilisées pour la réalisation d'au moins un contrôle de qualité (6) et que les données informatives détectées sont utilisées pour l'exécution d'un contrôle de sécurité en vue des prestations de garantie.

2. Procédé selon la revendication 1, **caractérisé en ce que** chacun des contrôles de qualité (6) cités est exécuté avant plusieurs phases de procédé (5), le contrôle de qualité (6) se déroutant conformément à une routine invariable.

3. Procédé selon revendication 1 ou 2, **caractérisé en ce que** plusieurs contrôles de qualité sont exécutés, des résultats de contrôles de qualité antérieurs étant pris en considération, au moins dans une partie des contrôles de qualité.

4. Procédé selon l'une des revendications 1 à 3, **caractérisé en ce que**, lors de chaque contrôle de qualité, une seule propriété physique est contrôlée.

5. Procédé selon l'une des revendications 1 à 4, **caractérisé en ce que** les premières et les deuxièmes données informatives sont saisies au moyen de capteurs acoustiques, optiques, électriques ou magnétiques.

6. Procédé selon l'une des revendications 1 à 5, **caractérisé en ce que** la machine d'emballage (V) est arrêtée quand la concordance entre les données de consigne (9) et les données réelles est insuffisante.

7. Procédé selon l'une des revendications 1 à 6, **caractérisé en ce que** la détermination des données réelles est effectuée dans une unité d'évaluation (8).

8. Procédé selon la revendication 7, **caractérisé en ce que** l'on utilise une unité d'évaluation (8) commune pour tous les contrôles de qualité (6).

9. Procédé selon l'une des revendications 1 à 8, **caractérisé en ce qu'**au moins une coupe d'emballage est soumise à un premier contrôle de qualité (6) avant le montage, au moins un emballage prêt au remplissage est soumis à un deuxième contrôle de qualité (6) avant le remplissage, au moins un emballage rempli est soumis à un troisième contrôle de qualité (6) avant la fermeture et qu'au moins un emballage fermé est soumis à un quatrième contrôle de qualité (6).

10. Procédé selon l'une des revendications 1 à 9, **caractérisé en ce que**, pour l'obtention des deuxièmes données informatives, qui décrivent les produits utilisés dans la machine d'emballage, une colle utilisée pour la formation de l'emballage, est détectée.

11. Procédé selon l'une des revendications 1 à 10, **caractérisé en ce que** pour l'obtention des deuxièmes données informatives, qui décrivent les fonctions mécaniques de la machine d'emballage (V), des paramètres de cachetage sont déterminés.

12. Procédé selon l'une des revendications 1 à 11, **caractérisé en ce que**, pour l'obtention des premières données informatives, on saisit l'aptitude à la formation de rainures et / ou l'aptitude au pliage et / ou l'aptitude au cachetage du matériau d'emballage (1) utilisé pour la formation de l'emballage et / ou la stérilité de l'emballage rempli et / ou l'étanchéité de l'emballage fermé.

13. Procédé selon l'une des revendications 1 à 12, **caractérisé en ce que** les données informatives en provenance du groupe des premières et des deuxièmes informations sont groupées en classes de propriétés et que chaque classe de propriétés est contrôlée au cours d'un contrôle de qualité (6).

14. Procédé selon la revendication 13, **caractérisé en ce que** les données informatives, contenues dans la classe de propriétés, sont traitées selon des règles prédéterminées pour la prise de décision.

15. Système de surveillance automatique d'un processus d'emballage ou de remplissage d'une machine d'emballage (V), dans lequel la machine d'emballage (V) peut être commandée dans plusieurs phases de procédé (5) séquentielles ou parallèles, au moyen d'une commande (4), le système présentant des premiers moyens, destinés à la saisies de premières données informatives, qui spécifient l'emballage et / ou le matériau d'emballage (1), utilisé à la fabrication de l'emballage, et le système présentant des deuxièmes moyens pour la saisie de deuxièmes données informatives, qui décrivent des parties de la machine et / ou des fonctions mécaniques de la machine d'emballage (V) et ou des produits utilisés pour la fabrication de l'emballage dans la machine d'emballage (V),
**caractérisé en ce que** les phases de procédé (5) peuvent être commandées depuis la formation de l'emballage jusqu'à la sortie de l'emballage, en passant par le remplissage de l'emballage avec le produit à emballer,
que le système présente au moins une unité d'évaluation et une unité de comparaison (8, 10) pour exécuter avant une phase de procédé (5) la détermination des données réelles (9), basées sur les premières et les deuxièmes données informatives et la comparaison entre ces données réelles et les données de consigne prédéterminées,
que le système présente des moyens pour l'autorisation de cette phase de procédé (5) et
que le système présente des moyens pour la détection et le notation de données informatives pour l'exécution d'un contrôle de sécurité en vue des prestations de garantie.

16. Système selon la revendication 15, **caractérisé en ce que** le système présente plusieurs modules, chaque module servant à l'exécution d'un contrôle de qualité (6) avant une phase de procédé (5) et les modules présentant une structure sensiblement identique.

17. Système selon la revendication 16, **caractérisé en ce que** les données informatives en provenance du groupe des premières et des deuxième données informatives sont groupées en classes de propriétés et que chaque module est associé à une classe de propriétés.
